# EUROPEAN PATENT SPECIFICATION

(11) **EP 0 466 783 B1**
(45) Date of publication and mention of the grant of the patent: **18.03.1998**
(21) Application number: 90906062.6
(22) Date of filing: 12.04.1990
(51) Int. Cl.: F16D 7/02, F16D 13/76, F16D 69/02, F16H 35/10

(54) **TORQUE REGULATING DEVICE**
DREHMOMENT-STEUERUNGSANORDNUNG
DISPOSITIF DE REGLAGE DE MOMENT DE TORSION

(30) Priority: 14.04.1989 AU 3668/89
(43) Date of publication of application: 22.01.1992
(73) Proprietor: VYSARN PTY LTD, Bentley Western Australia, 6102 (AU)
(72) Inventor: WOOD, William, Barrington, Kalamunda, W.A. 6076 (AU)
(74) Representative: Cardwell, Stuart Martin
(86) International application number: AU9000142
(87) International publication number: WO9012966

(56) References cited:
- FR-A- 1 078 797
- FR-A- 2 145 890
- FR-A- 2 154 027
- US-A- 2 779 175
- US-A- 3 201 953
- US-A- 3 550 739
- US-A- 4 060 159
- US-A- 4 133 434
- US-A- 4 533 032
- US-A- 4 725 151
- US-A- 4 741 424
- PATENT ABSTRACTS OF JAPAN, vol. 9, no. 333 (M-443)(2056), 27th December 1985; & JP-A-60 164 047 (TOCHIGI) 27-08-1985
- PATENT ABSTRACTS OF JAPAN M624, page 57 JP,A,62-80311 (TSUBAKIMOTO CHAIN CO) 13 April 1987 (18.04.87).

## Description

The present invention relates to a torque regulating device.

### BACKGROUND OF THE INVENTION

The device of the present invention is specifically intended for use in paying out and recovering electrical cables (and also hoses). However, it is to be appreciated that the present invention is of much wider applicability. Generally, cables are recovered on moving machinery by reeling onto a parallel reel (utilising a layered mechanism to give uniform layering) or onto a radial reel, where, in most cases, the cable lays vertically on a single plane. Other types are "standard" lay, where cable lays horizontally in three then two configuration and random lay where cable lays as it falls.

All the above types are in general use as each has specific advantages either in cost saving, dimensions, or cable tension reduction.

The prime requisite for a cable reel is to payout and recover cables without causing excessive tension in the cable itself. Cable manufacturers have developed cable which can take quite high tensions and are very flexible, but the upper limits of curvature and tension are well defined. Any excursion beyond this limit will lead to premature failure of a very costly item.

For short runs of cable and low frequency of use, spring reels were developed and these are quite satisfactory. The demand for reels which could handle long runs of cable, high lift of cable and high duty cycles led to the development of several types of reel drives, each with claims to satisfactory operation which in many cases were not justified.

The first were "Torque Motors" and hydraulic drives. Both these types are still in use, although hydraulic drives are uncommon. They power the reel in payout and recovery and by the use of sensors which "read" cable tension, try to control the speed to keep cable tension within acceptable limits. The cable tension sensors vary from simply mechanical devices to highly sophisticated micro processor systems with continuous monitoring. Also, control of starting torque and braking torque still seems to be a problem as the inertia of the reel and drives is not fully controlled and cable overtension with subsequent failure is common.

A later development in cable reeling was a friction drive unit which slipped when torque exceeded a certain value. The cable was reeled in under power by the drive unit and payed out by the cable driving the reel. One of these units used a spring loaded steel disc bearing on one side of a bronze worm in the drive unit. Lubrication was by the oil normally in the gear unit and the whole unit was enclosed. This unit depends on the slipping faces being lubricated at all times to prevent wear.

However, to prevent hydro-dynamic lubrication of the rubbing faces, where friction would be too low to be practical, fairly high unit pressures are used. While running, the drive gives a reasonably constant torque during payout and recovery, but if the cycle is interrupted for a short time, the oil film is partly extruded from between the slipping faces, the slipping faces contact each other and friction increases. On restarting, the payout cable tension to overcome this friction rises up to five times the normal running tension and this is rarely acceptable.

Further, if air cooling is used for the slipping faces, the units become larger and more expensive.

A later development of the friction drive was an air-cooled disc with circular asbestos friction pads uniformly loaded onto the disc with stacks of Belville spring washers. Each spring stack had a torque range and the torque could be adjusted within this range by a gear and threaded pressure plate. Being dry, this unit did not have the fault of high starting torque inherent in the oil lubricated unit. The unit was ideal within its torque and power range and, although fairly complicated and expensive, was reliable and had an excellent working life. The banning of the use of asbestos meant that the pad friction lining material had to be changed. The performance of the unit remained unchanged but the life of the friction pads and discs was considerably reduced and any competitive edge was lost. Research is continuing for a suitable friction material. The present invention seeks to overcome or at least alleviate some of the aforementioned problems of the prior art.

JP-A-62-080311 describes a torque limiter, the basic design of which is very old. It has a disc arranged to be fixedly attached to a shaft, friction material having a low coefficient of friction, wheel means arranged to be mounted about the shaft. The friction material is disposed between the disc and the wheel means, and means is provided for clamping the friction material between the disc and the wheel means. It employs two moisture and oil resistant discs of unspecified composition.

In accordance with the present invention there is provided a torque regulating device having a disc arranged to be fixedly attached to a shaft, a drive gear wheel means arranged to receive an external driving force to transfer same to the device, a low friction material having a low coefficient of friction which remains substantially constant whether the friction material is dry or lubricated disposed between the disc and the drive gear wheel means and a clamp means clamping the friction material between the disc and the drive gear wheel means, characterised in that the torque regulating device is arranged for continuous slipping at a predetermined torque value, a bearing is arranged to be disposed about the shaft, the drive gear wheel means is carried on the bearing, and the disc has an outer and an inner face provided with radially inclined passages extending longitudinally through the disc from the outer face to the inner face and angled radially outwardly from the outer face to the inner face to enable lubricating liquid assisted by centrifugal force to pass to the interior of the device adjacent the bearing and the low friction material.

The present invention will now be described by way of example, with reference to the accompanying drawings in which:
Figure 1 is an upper perspective view of a first embodiment of a torque regulating device in accordance with the present invention in an exploded condition;
Figure 2 is a sectional view of the torque regulating device of Figure 1;
Figure 3 is an upper perspective view of a second embodiment of a torque regulating device in accordance with the present invention in an exploded condition;
Figure 4 is a sectional view of the torque regulating device of Figure 3;
Figure 5 is an upper perspective view of a third embodiment of a torque regulating device in accordance with the present invention in an exploded condition;

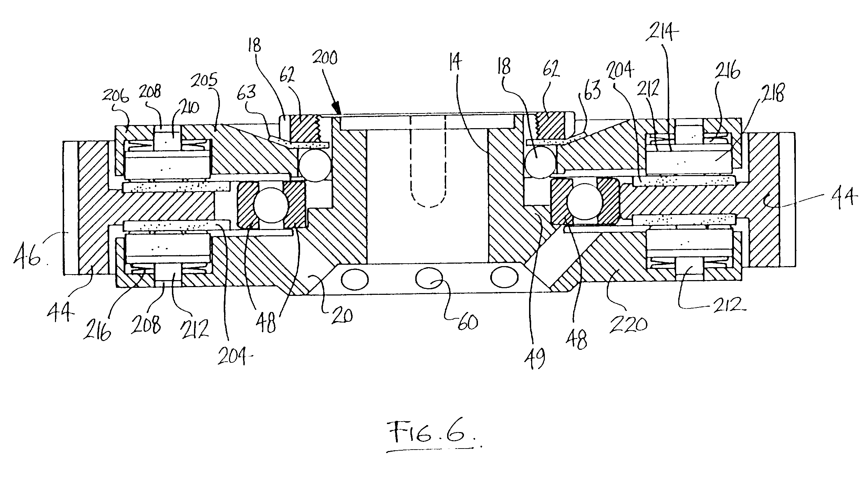

Figure 6 is a sectional view of the torque regulating device of Figure 5; and
Figure 7 is a side view of a gearbox partially broken away incorporating the device of Figures 1 and 2, Figures 3 and 4 or Figures 5 and 6.

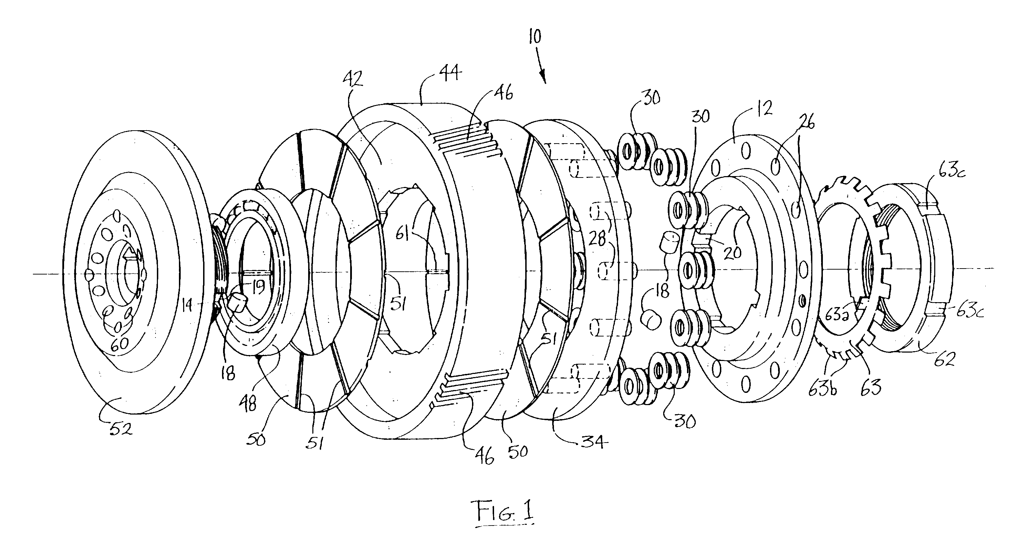

Shown in Figure 1 is a first embodiment of a torque regulating device 10 comprising an annular pressure plate 12 keyed to an externally threaded sleeve 14, by a plurality of cylindrical roller keys 18. Each key 18 is received in a respective external keyway 19 in the sleeve 14 and a respective internal keyway 20 in the pressure plate 12. Spaced around the circumference of the pressure plate 12 are a plurality of apertures 26 each able to receive a respective spigot 28 passing through a spring means in the form of a stack of Belville washers 30. The spigots 28 are located around the circumference of a first annular disc 34. The disc 34 is keyed to the pressure plate 12 by the spigots 28. Thus, the pressure plate 12 and the disc 34 rotate in unison.

Adjacent to the disc 34 is a first annular disc 40 of friction material. The disc 40 is formed of a low friction material of a type which has a low coefficient of friction which remains substantially constant regardless of whether the disc 40 is dry or lubricated. Typically, each disc 40 is formed of an ultra high molecular weight polyethylene (UHMW PE).

The low friction material is selected according to the working conditions of the device 10, as will be described hereinafter.

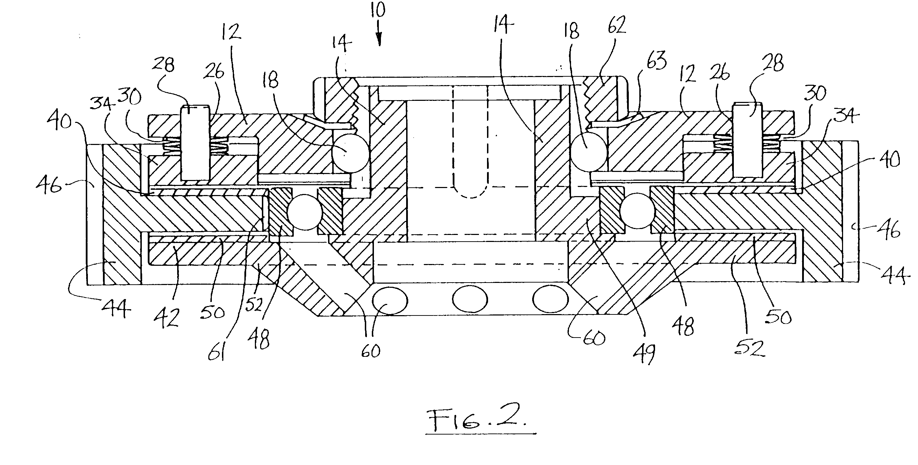

The disc 40 bears on a web 42 of a gear wheel 44 having peripheral teeth 46. The gear wheel 44 is carried on a bearing 48 which is mounted about a step 49 of the sleeve 14 (see Figure 2) and is thus able to rotate relative to the shaft.

A second annular disc 50 formed of low friction material, similar to the disc 40 bears upon the opposite side of the web 42. The disc 50 is adjacent a second annular disc 52 which is formed integrally with the sleeve 14. The low friction discs 40 and 50 sit on the bearing 48 as can be seen in Figure 2 so that the discs 40 and 50 are isolated from rotation of the shaft.

The disc 52 has holes 60 to allow lubricating liquid, such as oil, to pass therethrough and cool the disc 50.

The web 42 has inwardly facing notches 61 adjacent the periphery of the bearing 48, to allow passage of lubricating liquid to cool the disc 40. It has been found that oil is not able to pass through the bearing 48 at high speed. The notches 61 allow the oil to pass through the disc 40 to prevent it overheating.

Further, the discs 40 and 50 have radial grooves 51 to allow passage of lubricating liquid. The radial grooves 51 are cut on both sides of the discs 40 and 50 and are staggered on opposite sides thereof as can be seen in Figure 1.

To cool the faces of the discs 40 and 50 oil flows into the radially inclined oil passages 60. The oil flows radially through the passages 60 assisted by centrifugal force and passes to the interior of the apparatus adjacent the bearing 48.

At slow speeds oil passes through the bearing 48 and then radially through the outer faces of the discs 40 and 50 finally discharged through a gap between the disc 34 and the gear wheel 44.

At high speeds churning of the oil in the bearing 48 prevents oil flow and there is a tendency for overheating to occur. Thus, the notches 61 are provided in the web 42. The notches 61 are located outwardly of the bearing 48 and are proportioned to divide oil flow between the friction faces of both discs 40 and 50.

The inner diameter of the discs 40 and 50 clear the notches 61 so that oil can enter the radial slots 51 or both faces of the discs 40 and 50.

The threaded sleeve 14 passes through the disc 34 and the pressure plate 12.

An internally threaded locknut 62 threadedly engages the threaded sleeve 14 and bears against the pressure plate 12 to thereby clamp the discs 40 and 50 against the web 42. A lockwasher 63 is disposed between the locknut 62 and the pressure plate 12. The lockwasher 63 has an axially projecting tang 63a which is arranged to be disposed in one of the keyways 20 and a plurality of radially projecting tangs 63b. The locknut 62 contains a plurality of spaced peripheral notches 63c each arranged to receive a tang 63b. In this way, the locknut 62 is prevented from inadvertently loosening or tightening.

It is possible to deliberately loosen or tighten the locknut 62 and so vary the unit pressure clamping the discs 40 and 50 against the web 42.

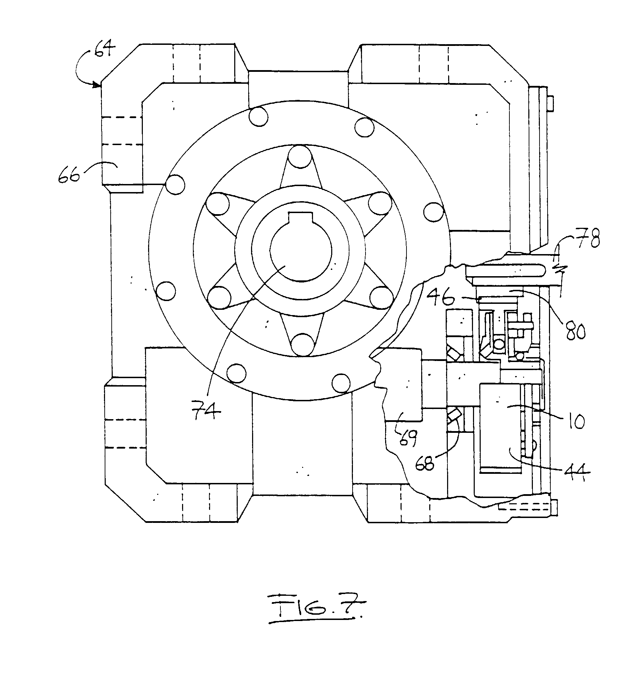

Shown in Figure 7 is a gearbox 64 incorporating the torque regulating device 10, of figure 1. The gearbox 64 comprises a casing 66 and bearings 68 only (one of which can be seen), internal of the casing 66, to support a shaft 69. The sleeve 14 is keyed to the shaft 69 with a rectangular key and returned with a circlip.

The shaft 69 has a worm gear between the bearings 68, to engage a ring gear keyed to an output shaft 74. It is to be appreciated that, as an alternative, a bevel helical gear combination may be used instead of the worm gear and ring gear combination.

An external motor is attached to the casing 66. A gear 80 is keyed to a motor shaft 78 to engage the gear teeth 46 of the gear wheel 44. Where lower speeds are required the motor may be replaced with a gear motor.

Lubricating liquid, such as oil, is contained within the casing 66 to cool the torque regulating device 10 and simultaneously lubricate the bearings and gear teeth within the casing 66. This cooling occurs because the device 10 is at least partially immersed in the cooling fluid. Usually, the device 10 is almost totally immersed in the cooling fluid. However, it is to be appreciated that other methods of applying cooling fluid other than splash lubrication may be used. For example, pressure lubrication by a pump may be used instead.

In use, a load (not shown) such as a reel having cable wound thereon, is attached to the output shaft 74. The motor is then activated to wind in the cable.

Referring now to Figure 1, the gear 80 engages and rotates the gear 44. The washers 30 bear on the disc 34 to urge the discs 40 and 50 onto the web 42 to thereby clamp the web 42 therebetween. By varying the number, thickness and compression of the washers 30, the unit pressure clamping the discs 40 and 50 onto the web 42 may be varied. Such clamping results in a friction force which resists rotation of the gear 44 relative to the discs 40 and 50. If the torque supplied by the motor is greater than the break out torque i.e. the maximum friction force supplied by the discs 40 and 50, then the shaft 69 will rotate or slip relative to the gear 44. This results in the discs 34 and 52 slipping on their respective low friction discs 40 and 50. Further, the web slips on the low friction discs 40 and 50.

The worm gear rotates in unison witn the shaft 69 which cooperates with the ring gear to rotate the output shaft 74 to whereby wind in cable.

Further, the torque applied to the shaft 69 in such a situation will be essentially constant at the break out torque.

This is important when winding in cable so as to wind in the cable at an essentially constant tension so as not to unduly stretch the cable. The value of the "break out" torque may be varied by varying the unit pressure. This is achieved by suitably loosening or tightening the locknut 62.

However, this slip generates heat which must be dissipated. By virtue of the device 10 being at least partially immersed or otherwise contracted by lubricating oil, heat is carried away by the oil. Heat absorbed by the oil is then transferred to the casing 66 and thereby dissipated.

Further, by virtue of the material properties of the discs 40 and 50, the break out torque is substantially uneffected by the presence of lubricating oil.

Even further, when the device 10 is not operating, the washers 30 cause the lubricating oil to be squeezed out from between the discs 40 and 50 and the web 42. In some prior art devices, this will increase the coefficient of friction and hence the value of the break out torque. This leads to large torque spikes or momentary increases in the value of the break out torque. This results in stretching of the cable. Due to the aforesaid material properties of the discs 40 and 50 these torque spikes are substantially absent from the device 10 of the present invention. The material 40 and 50 is preferably a low pressure high density polyethylene with a very high degree of polymerisation. The molecular weight, determined by the viscosimetric method is between 3 and 8 million. As molecular weight of polyethylene increases, higher values are obtained for important properties like wear resistance and notched impact strength. These materials are commonly referred to as ultra high molecular weight polyethylene (UHMW PE). They should not be confused with high molecular weight polyethylene (HMW PE) which has a molecular weight of about 500,000 and which cannot reach the level of UHMW PE in terms of properties.

A particularly suitable UHMW PE is sold under the Trade Mark "SOLIDUR" and a particularly suitable form of "SOLIDUR" is "SOLIDUR SUPER".

Cooling is critical with this material and torque is governed by the applied pressure and velocity of the rubbing faces. Typically, the UHMW PE is able to withstand a temperature of about 200°C without any substantial change in its properties or structure. The majority of torque regulating applications can be met with this material. The polyethylene discs 40 and 50 have been found not to wear to any appreciable extent, even under the high bearing load used and adjustment ceases to be a critical requirement, although the device 10 has an adjustment facility.

Alternatives to the above material were tried and initial tests were with "Teflon" coated on aluminium discs contacting a steel interface, aluminium being a good conductor to remove heat by conduction. The "Teflon" was dissolved by the lubricating oil at the temperature attained.

Carbon impregnated "Teflon" failed in a similar manner. When nylon was tried it softened and extruded at well below the power requirements of the device 10.

In use, when it is desired to payout cable the motor is deactivated. The output shaft 74 then rotates, to payout cable. The ring gear cooperates with the worm gear and thereby rotates the shaft 69.

The motor 76 is deactivated and locked by a brake on the motor so that the gear 44 is held substantially stationary by virtue of its engagement with the gear 80. Thus, when unwinding, the gear 44 is stationary and the shaft 69 and discs 40 and 50 slip relative to the shaft 69. Therefore, the torque applied to the shaft 69 is the break out torque. As when winding cable in, this slip generates heat which is absorbed by the lubricating oil. Again, due to the properties of the discs of material 40 and 50 the torque applied to the shaft 69 is substantially constant at the break out torque.

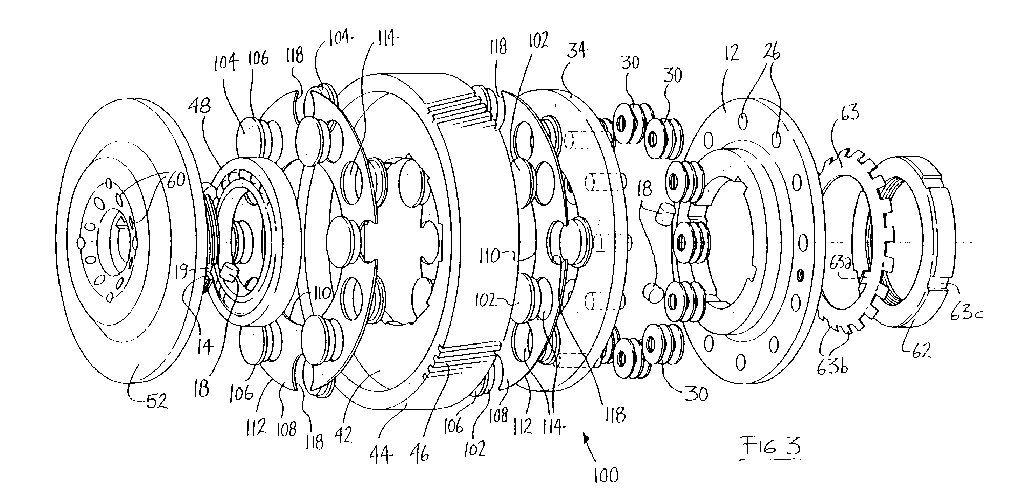

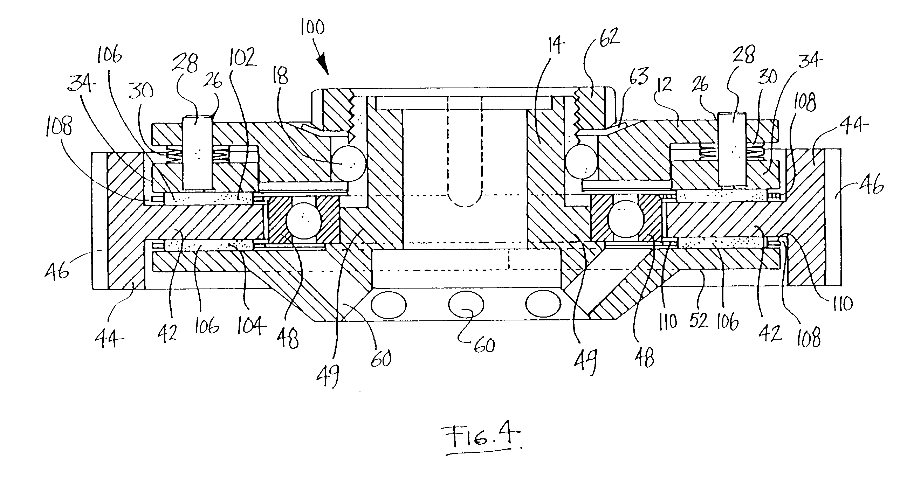

Shown in Figures 3 and 4 is a second embodiment of a torque regulating device 100, like numerals denoting like parts. If the unit pressure is not high enough to extrude the oil, from between the slipping faces then the torque is provided by shearing of the oil film, especially at high speeds. When the faces stop slipping, the oil is still between the faces and any applied torque from the reel causes slippage to occur at a very slow rate due to the hydro-dynamic (full film) lubrication.

If the reel is restrained for a few seconds, the oil between the faces is partially extruded and boundary lubrication, with its high co-efficient of friction, takes over.

This characteristic is of value in high speed, low torque reels which are reversed at a high rate, as payout friction is virtually zero. However, if the reel has a high vertical drop then the weight of cable will cause the reel to unwind slowly at a very low torque and dump the cable. This is sometimes undesirable, for example, in window washing applications.

To cause the device 10 to hold the cable when the drive stops, the unit pressure on the slipping faces must be high enough to extrude the oil on stopping. With the fixed areas of the annular discs of low friction material 40 and 50 (Figures 1 and 2) this would result in a "break out" torque which was too high for some applications.

Further, the annular rings tended to restrict flow of the cooling oil at high speed so the slipping speed is limited at high pressures.

Thus, it is necessary to have a sufficiently high unit pressure to extrude oil from between the discs 40 and 50 and the webs 42 and simultaneously have a sufficiently low break out torque in order not to overstress any cables. This is achieved by reducing the area of the discs 40 and 50 whilst maintaining a high unit pressure.

Reduction of the area is achieved by replacing the discs 40 and 50 with a plurality of UHMW PE buttons 102 and 104. Each button 102 and 104 has a circumferential flange 106. The buttons 102 and 104 are received and held relative to 0 each other in annular metal button cages 108. The cages 108 have inner edges 110 and outer edges 112. The cages 108 each have a plurality of evenly spaced first apertures 114 between the inner edge 110 and the outer edge 112. The cage 108 also has a plurality of spaced second, open 5 apertures 118. Buttons 102 or 104 disposed in the second apertures 118 extend past the outer edge 112 to contact the inner periphery of the gear 44. This centralises and locates each cage 108 relative to the web 42. This prevents the buttons 102 and 104 moving and thereby changing the "break out" torque.

By varying the number of buttons 102 and 104, the break out torque may be accordingly varied.

As shown, the buttons 102 and 104 are arranged in staggered manner. That is, the buttons 102 and 104 are arranged such that respective flanges 106 of adjacent buttons 102 and 104 are on opposite sides of the cages 108. This prevents the cages 108 contacting the web 42 and the discs 34 and 52. This complete isolation of the cages is important because any wear particles resulting from such contact may contaminate the buttons 102 and 104 and alter their coefficients of friction.

In use, the device 100 operates in a similar manner to the device 10 of Figure 1.

However, due to the buttons 102 and 104 being spaced around the cage 108, there is a greater space for oil to flow through and cooling is thereby improved.

Further, the unit pressure clamping the buttons 102 and 104 onto the web 42 is sufficient to extrude oil from between the buttons 102 and 104 and the web 42. In combination with the reduced contact area of the buttons 102 and 104, compared to the discs 40 and 50 this results in a device 100 which, in addition to the benefits of the device 10 of Figure 1, holds when it stops rather than slipping.

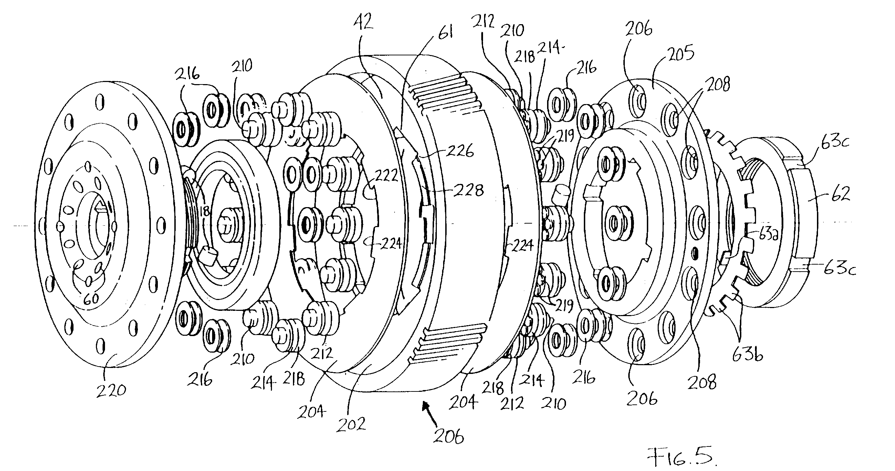

Shown in Figure 5 is a third embodiment of a torque regulating device 200, like numerals denoting like parts. In some very heavy duty applications, the temperature of the oil may exceed 200°C. This may be beyond the upper working limit of even the ultra high molecular weight polyethylene. Thus, use of the UHMW PE will result in unacceptable performance and/or degradation of the UHMW PE. The embodiment of Figure 5 is primarily intended for ceramic materials.

Located on each side of the web 42 is an annular recess 202 arranged to receive a respective annular ceramic disc 204. Each recess 202 locates its respective disc 204 radially of the web 42.

The pressure plate 12 and the disc 34 have been replaced by an annular disc 205. The disc 205 has a plurality of evenly spaced recesses 206. Each recess 206 has an aperture 208 extending therethrough.

Slidable in each aperture 208 is a spigot 210, of a pressure button 212. Each button 212 has a steel disc 214 at one end of the spigot 210 and is arranged to compress a stack of Belville spring washers 216 located in a respective recess 206. A respective spigot 210 passes through a stack of washers 216 and serves to locate them in the recess 206.

On the side thereof remote from the spigot 210 each disc 214 bears on a respective ceramic button 218 which is also located in the respective recess 206. Each disc 214 urges its respective button 218 against a respective one of the annular ceramic discs 204. Each button 218 has an outer face formed with a plurality of flat topped projections 219 which reduce the overall area of contact of the button 218 with the disc 204. That is the projections 219 have outer slipping faces which collectively have a smaller area than the button 212 as a whole.

A disc 220 is constructed similarly to the disc 205 and it also contains recesses and apertures corresponding with the recesses 206 and apertures 208 of the disc 204.

The slipping faces of the projections 219 and the discs 204 are ground to an extremely fine surface finish typically below an average surface roughness of about 55 microns. It is to be appreciated that the ceramic buttons 218 may incorporate a spigot. This would then dispense with the need for a pressure button 212. However, at present, it is relatively expensive to incorporate spigots with the ceramic buttons 218.

The discs 204 have inner faces 222 which are castellated with inwardly extending projections 224. Further, the regions 226 of the web 42 between the notches 61 have outer wider portions 228. In use, the projections 224 are located between regions 226 and are positively engaged and prevented from rotating relative to the web 42 by the wider portions 228. Thus, the discs 204 are positively located. As an alternative to the positive location described, the ceramic discs 204 could be bonded to the web 42 by a suitable adhesive.

The use of a ceramic material has the advantage that the apparatus is able to withstand higher temperatures compared to apparatus using UHMW PE.

In use, the device 200 operates in a similar manner to the device 100 of Figure 2.

By using a ceramic to ceramic rubbing surface, this does not have the temperature limitation of the UHMW PE.

Preferably the ceramic material is a very fine grained high purity aluminium ceramic, typically about 99.9% pure. A ceramic material which is useful in the apparatus of the present invention is sold under the Trade Mark "ALSINT". A particularly suitable form of "ALSINT" is "ALSINT 99,7". The total wattage dissipated by the device 200 is then a function of the heat radiation capacity of the gear box 64. In nearly all cases this limit would not be reached. The upper temperature limit of the oil is generally the limiting factor.

Slip does not occur between the discs 204 and the web 42. Further, the domed projections 219 reduce the contact area of the ceramic faces which increases pressure and squeezes out oil between the contacting faces more efficiently. The oils used in conjunction with the apparatus of the present invention is chosen more of its heat dissipating qualities than its lubricating quality. For this purpose synthetic oil has been found to have superior qualities compared with mineral oil. However, good lubrication qualities are required for the bearings and gears associated with the apparatus of the present invention. A suitable synthetic oil is sold under the Trade Mark "SYNTHESO" and particularly suitable synthetic oils are "SYNTHESO HT 320" and "SYNTHESO D 460 EP".

The low friction material used in the apparatus of the present invention typically has a coefficient of friction no more than 0.05 such as in the range from 0.03 to 0.05. The present invention provides a torque regulating device in which the problems of torque spikes upon start up are reduced. The present invention may easily be installed in a gearbox as shown and utilise the lubricating oil contained within the gearbox for cooling of the device.

The gear wheel 44 may be a V-belt pulley or similar pulley.

## Claims

1. A torque regulating device (10,100,200) having a disc (52) arranged to be fixedly attached to a shaft (69), a drive gear wheel means (44) arranged to receive an external driving force to transfer same to the device (10,100,200), a low friction material having a low coefficient of friction which remains substantially constant whether the friction material is dry or lubricated disposed between the disc (52) and the drive gear wheel means (44) and a clamp means clamping the friction material between the disc (52) and the drive gear wheel means (44), characterised in that the torque regulating device (10,100,200) is arranged for continuous slipping at a predetermined torque value, a bearing (48) is arranged to be disposed about the shaft (69), the drive gear wheel means (44) is carried on the bearing (48), and the disc (52) has an outer face and an inner face provided with radially inclined passages (60) extending longitudinally through the disc from the outer face to the inner face and angled radially outwardly from the outer face to the inner face to enable lubricating liquid assisted by centrifugal force to pass to the interior of the device adjacent the bearing (48) and the low friction material.

2. A torque regulating device (10,100,200) according to claim 1, characterised in that the disc (52) has a threaded sleeve (14), and the clamp means (12) comprises a locknut (62) adapted to engage threadedly the threaded sleeve (14) and clamp the friction material against the gear wheel means (44).

3. A torque regulating device (10,100,200) according to claim 2, characterised in that there is provided a lockwasher (63) for preventing rotation of the locknut (62) relative to the threaded sleeve (14).

4. A torque regulating device (10,100,200) according to claim 2 or 3, characterised in that there is provided a further disc (34) which is keyed to the threaded sleeve (14) so that the first mentioned disc (52) rotates in unison with the further disc (34) and friction material is disposed between the further disc (34) and the gear wheel means (44).

5. A torque regulating device (10,100,200) according to claim 4, characterised in that there is provided a pressure plate (12) which is located adjacent the further disc (34), and spring means (30) is disposed between the further disc (34) and the pressure plate (12), the spring means (30) bearing on the further disc (34) so that the further disc (34) urges the friction material onto the gear wheel means (44).

6. A torque relating device (10,100,200) according to claim 5, wherein the spring means (30) is in the form of at least one spring washer.

7. A torque regulating device according to claim 6, characterised in that the further disc (34) has at least one spigot (28) passing through the at least one spring washer.

8. A torque regulating device according to claim 7, characterised in that the pressure plate (12) has apertures (26) corresponding to the or each spigot (28), each spigot (28) being slidably received in a corresponding one of the apertures (26).

9. A torque regulating device (10) according to any one of the preceding claims, characterised in that in the low friction material is in the form of an annular disc (40,50).

10. A torque regulating device (10) according to claim 9, characterised in that the annular disc of low friction material has one or more radial grooves (51) to allow passage of lubricating liquid.

11. A torque regulating device (100,200) according to any one of claims 1 to 8, characterised in that the low friction material is in the form of a plurality of buttons (102, 104).

12. A torque regulating device according to claim 11, characterised in that the device comprises a button cage (108) in which buttons of low friction material are received and held relative to each other.

13. A torque regulating device (100) according to claim 12, characterised in that the button cage (108) comprises a plurality of apertures (114), each button (102,104) has a circumferential flange (106) and is received in one of the apertures (114) in the button cage (108).

14. A torque regulating device (100) according to claim 13, characterised in that the flanges (106) of adjacent radially spaced buttons (102,104) are disposed on opposite sides ofthe button cage (108) to prevent the button cage (108) from contacting the gear wheel means (44) or the disc (34,52).

15. A torque regulating device (100) according to claim 14, characterised in that the gear wheel means (44) comprises an annular recess and the button cage (108) has a plurality of peripheral open apertures (118) configured such that a button (102,104) received in one of the open apertures (118) extends past an outer edge of the button cage(108) to thereby centralise the button cage (108) within the annular recess of the gear wheel means (44) and to prevent the periphery of the button cage (108) from contacting the gear wheel means (44).

16. A torque regulating device (200) according to claim 11, characterised in that the disc (205,220) comprises a plurality of recesses (206) and a button (212) is located in a respective recess (206) in the disc (205,220).

17. A torque regulating device (200) according to claim 16, characterised in that the device (200) comprises an annular disc (204) of low friction material and the buttons (212) have faces which engage with the annular disc (204) of low friction material, the annular disc (204) of low friction material being disposed between the buttons (212) and the gear wheel means (44) such that the annular disc (204) of low friction material is clamped between the buttons (212) and the gear wheel means (44).

18. A torque regulating device (200) according to claim 17, characterised in that the faces of the buttons (212) are formed with a plurality of projections (219).

19. A torque regulating device (200) according to claim 17 or 18, characterised in that the annular disc of low friction material (204) is received and located in a corresponding annular recess (202) in the gear wheel means (44).

20. A torque regulating device (200) according to claim 19, characterised in that the annular disc (204) of low friction material is positively engaged by the gear wheel means (44) so as to prevent the annular disc (204) from rotating relative to the gear wheel means (44).

21. A torque regulating device (200) according to any one of the preceding claims, characterised in that the gear wheel means has one or more notches (61) extending therethrough to allow passage of the lubricating liquid therethrough to cool the friction material.

22. A torque regulating device (10) according to claim 9 or 10, characterised in that the low friction material is an ultra high molecular weight polyethylene.

23. A torque regulating device (10) according to claim 22, characterised in that the ultra high molecular weight polyethylene has a molecular weight between 3 million and 8 million.

24. A torque regulating device (100,200) according to any one of claims 1 to 20, characterised in that the low friction material has slipping faces and is ceramic, with the slipping faces ground to an extremely fine structure finish.

25. A torque regulating device (100,200) according to claim 24, characterised in that the slipping faces are ground to an average surface roughness below about 55 microns.

## Patentansprüche

1. Drehmomentregulierungseinrichtung (10, 100, 200) mit einer Scheibe (52), die an einer Welle (69) zu befestigen ist, einem Antriebszahnradmittel (44) zum Aufnehmen einer externen Antriebskraft zur Übertragung selbiger auf die Einrichtung (10, 100, 200), einem Material mit geringer Reibung mit einem niedrigen Reibungskoeffizienten, der unabhängig davon, ob das Reibungsmaterial trocken oder geschmiert ist, im wesentlichen konstant bleibt, wobei das Material zwischen der Scheibe (52) und dem Antriebszahnradmittel (44) angeordnet ist, und einem Klemmittel, das das Reibungsmaterial zwischen der Scheibe (52) und dem Antriebszahnradmittel (44) festklemmt, dadurch gekennzeichnet, daß die Drehmomentregulierungseinrichtung (10, 100, 200) so ausgelegt ist, daß sie bei einem vorbestimmten Drehmomentwert beständig durchdreht, ein Lager (48) um die Welle (69) herum angeordnet ist, das Antriebszahnradmittel (44) auf dem Lager (48) getragen wird und die Scheibe (52) eine Außenfläche und eine Innenfläche mit radial geneigten Durchgängen (60) aufweist, die sich in Längsrichtung von der Außenfläche zur Innenfläche durch die Scheibe erstrecken und von der Außenfläche radial nach außen zur Innenseite abgewinkelt sind, damit die Schmierflüssigkeit mit Unterstützung der Zentrifugalkraft zum Inneren der Einrichtung neben dem Lager (48) und dem Material mit geringer Reibung gelangen kann.

2. Drehmomentregulierungseinrichtung (10, 100, 200) nach Anspruch 1, dadurch gekennzeichnet, daß die Scheibe (52) eine mit einem Gewinde versehene Muffe (14) aufweist und das Klemmittel (12) eine Nutmutter (62) umfaßt, die die mit einem Gewinde versehene Muffe (14) gewindemäßig in Eingriff nimmt und das Reibungsmaterial gegen das Zahnradmittel (44) klemmt.

3. Drehmomentregulierungseinrichtung (10, 100, 200) nach Anspruch 2, dadurch gekennzeichnet, daß eine Sicherungsscheibe (63) zum Verhindern der Drehung der Nutmutter (62) bezüglich der mit einem Gewinde versehenen Muffe (14) vorgesehen ist.

4. Drehmomentregulierungseinrichtung (10, 100, 200) nach Anspruch 2 oder 3, dadurch gekennzeichnet, daß eine weitere Scheibe (34) vorgesehen ist, die mit der mit einem Gewinde versehenen Muffe (14) verzahnt ist, so daß sich die zuerst erwähnte Scheibe (52) gemeinsam mit der weiteren Scheibe (34) dreht, und zwischen der weiteren Scheibe (34) und dem Zahnradmittel (44) Reibungsmaterial angeordnet ist.

5. Drehmomentregulierungseinrichtung (10, 100, 200) nach Anspruch 4, dadurch gekennzeichnet, daß eine Druckplatte (12) vorgesehen ist, die neben der weiteren Scheibe (34) angeordnet ist, und ein Federmittel (30) zwischen der weiteren Scheibe (34) und der Druckplatte (12) angeordnet ist, wobei das Federmittel (30) an der weiteren Scheibe (34) anliegt, so daß die weitere Scheibe (34) das Reibungsmaterial an das Zahnradmittel (44) drängt.

6. Drehmomentregulierungseinrichtung (10, 100, 200) nach Anspruch 5, wobei das Federmittel (30) in Form mindestens eines Federrings vorliegt.

7. Drehmomentregulierungseinrichtung nach Anspruch 6, dadurch gekennzeichnet, daß die weitere Scheibe (34) mindestens einen Zapfen (28) aufweist, der durch den mindestens einen Federring geht.

8. Drehmomentregulierungseinrichtung nach Anspruch 7, dadurch gekennzeichnet, daß die Druckplatte (12) Aperturen (26) aufweist, die dem bzw. jedem Zapfen (28) entsprechen, wobei jeder Zapfen (28) in einer entsprechenden der Aperturen (26) gleitend aufgenommen ist.

9. Drehmomentregulierungseinrichtung (10) nach einem der vorhergehenden Ansprüche, dadurch gekennzeichnet, daß das Material mit geringer Reibung in Form einer ringförmigen Scheibe (40, 50) vorliegt.

10. Drehmomentregulierungseinrichtung (10) nach Anspruch 9, dadurch gekennzeichnet, daß die ringförmige Scheibe aus Material mit geringer Reibung eine oder mehrere radiale Nuten (51) aufweist, um den Durchtritt von Schmierflüssigkeit zu gestatten.

11. Drehmomentregulierungseinrichtung (100, 200) nach einem der Ansprüche 1 bis 8, dadurch gekennzeichnet, daß das Material mit geringer Reibung in Form von mehreren Knöpfen (102, 104) vorliegt.

12. Drehmomentregulierungseinrichtung nach Anspruch 11, dadurch gekennzeichnet, daß die Vorrichtung einen Knopfkäfig (108) umfaßt, in dem Knöpfe aus Material mit geringer Reibung aufgenommen werden und bezüglich einander gehalten werden.

13. Drehmomentregulierungseinrichtung (100) nach Anspruch 12, dadurch gekennzeichnet, daß der Knopfkäfig (108) mehrere Aperturen (114) umfaßt, wobei jeder Knopf (102, 104) einen Umfangsflansch (106) aufweist und in einer der Aperturen (114) in dem Knopfkäfig (108) aufgenommen ist.

14. Drehmomentregulierungseinrichtung (100) nach Anspruch 13, dadurch gekennzeichnet, daß die Flansche (106) benachbarter radial beabstandeter Knöpfe (102, 104) auf entgegengesetzten Seiten des Knopfkäfigs (108) angeordnet sind, um zu verhindern, daß der Knopfkäfig (108) das Zahnradmittel (44) oder die Scheibe (34, 52) berührt.

15. Drehmomentregulierungseinrichtung (100) nach Anspruch 14, dadurch gekennzeichnet, daß das Zahnradmittel (44) eine ringförmige Ausnehmung umfaßt und der Knopfkäfig (108) mehrere umfangsmäßige offene Aperturen (118) aufweist, die derart ausgelegt sind, daß ein in einer der offenen Aperturen (118) aufgenommener Knopf (102, 104) über einen Außenrand des Knopfkäfigs (108) hinaus verläuft und auf diese Weise den Knopfkäfig (108) in der ringförmigen Ausnehmung des Zahnradmittels (44) zentriert und verhindert, daß der Umfang des Knopfkäfigs (108) das Zahnradmittel (44) berührt.

16. Drehmomentregulierungseinrichtung (200) nach Anspruch 11, dadurch gekennzeichnet, daß die Scheibe (205, 220) mehrere Ausnehmungen (206) umfaßt und ein Knopf (212) in einer jeweiligen Ausnehmung (206) in der Scheibe (205, 220) positioniert ist.

17. Drehmomentregulierungseinrichtung (200) nach Anspruch 16, dadurch gekennzeichnet, daß die Einrichtung (200) eine ringförmige Scheibe (204) aus Material mit geringer Reibung umfaßt und die Knöpfe (212) Flächen aufweisen, die die ringförmige Scheibe (204) aus Material mit geringer Reibung in Eingriff nehmen, wobei die ringförmige Scheibe (204) aus Material mit geringer Reibung zwischen den Knöpfen (212) und dem Zahnradmittel (44) angeordnet ist, so daß die ringförmige Scheibe (204) aus Material mit geringer Reibung zwischen den Knöpfen (212) und dem Zahnradmittel(44) festgeklemmt ist.

18. Drehmomentregulierungseinrichtung (200) nach Anspruch 17, dadurch gekennzeichnet, daß die Flächen der Knöpfe (212) mit mehreren Vorsprüngen (219) ausgebildet sind.

19. Drehmomentregulierungseinrichtung (200) nach Anspruch 17 oder 18, dadurch gekennzeichnet, daß die ringförmige Scheibe aus Material mit geringer Reibung (204) in einer entsprechenden ringförmigen Ausnehmung (202) in dem Zahnradmittel (44) aufgenommen und positioniert ist.

20. Drehmomentregulierungseinrichtung (200) nach Anspruch 19, dadurch gekennzeichnet, daß die ringförmige Scheibe (204) aus Material mit geringer Reibung von dem Zahnradmittel (44) formschlüssig in Eingriff genommen wird, um zu verhindern, daß sich die ringförmige Scheibe (204) bezüglich des Zahnradmittels (44) dreht.

21. Drehmomentregulierungseinrichtung (200) nach einem der vorhergehenden Ansprüche, dadurch gekennzeichnet, daß das Zahnradmittel eine oder mehrere Kerben (61) aufweist, die sich durch das Zahnradmittel hindurch erstrecken, um zum Kühlen des Reibungsmaterials den Durchtritt von Schmierflüssigkeit dort hindurch zu gestatten.

22. Drehmomentregulierungseinrichtung (10) nach Anspruch 9 oder 10, dadurch gekennzeichnet, daß das Material mit geringer Reibung ein ultrahochmolekulares Polyethylen ist.

23. Drehmomentregulierungseinrichtung (10) nach Anspruch 22, dadurch gekennzeichnet, daß das ultrahochmolekulare Polyethylen ein Molekulargewicht zwischen 3 Millionen und 8 Millionen aufweist.

24. Drehmomentregulierungseinrichtung (100, 200) nach einem der Ansprüche 1 bis 20, dadurch gekennzeichnet, daß das Material mit geringer Reibung Schlupfflächen aufweist und keramisch ist, wobei die Schlupfflächen zu einer Oberfläche mit extrem feiner Struktur geschliffen sind.

25. Drehmomentregulierungseinrichtung (100, 200) nach Anspruch 24, dadurch gekennzeichnet, daß die Schlupfflächen bis zu einer durchschnittlichen Oberflächenrauhigkeit von unter etwa 55 Mikrometer geschliffen sind.

## Revendications

1. Dispositif régulateur de couple (10, 100, 200) ayant un disque (52) agencé pour être rigidement fixé à un arbre (69), un moyen de pignon d'engrenage d'entraînement (44) agencé pour recevoir une force d'entraînement extérieure et la transférer au dispositif (10, 100, 200), un matériau à faible friction ayant un faible coefficient de friction lequel reste sensiblement constant, que le matériau à friction disposé entre le disque (52) et le moyen de pignon d'engrenage d'entraînement (44) soit sec ou lubrifié, et un moyen d'immobilisation immobilisant le matériau à friction entre le disque (52) et le moyen de pignon d'engrenage d'entraînement (44), caractérisé en ce que le dispositif régulateur de couple (10, 100, 200) est agencé pour déraper en continu à une valeur prédéterminée du couple, un palier (48) est agencé de manière à être placé autour de l'arbre (69), le moyen de pignon d'engrenage d'entraînement (44) est supporté sur le palier (48), et le disque (52) a une face extérieure et une face intérieure pourvues de passages (60) inclinés radialement, s'étendant dans la direction longitudinale à travers le disque depuis la face extérieure jusqu'à la face intérieure, et inclinées radialement vers l'extérieur depuis la face extérieure jusqu'à la face intérieure, pour permettre au liquide de lubrification, avec l'aide de la force centrifuge, de passer jusqu'à l'intérieur du dispositif adjacent au palier (48) et au matériau à faible friction.

2. Dispositif régulateur de couple (10, 100, 200) selon la revendication 1, caractérisé en ce que le disque (52) a un manchon fileté (14), et en ce que le moyen d'immobilisation (12) comprend un écrou de blocage (62) apte à venir en prise de filetage avec le manchon fileté (14) et à immobiliser le matériau à friction contre le moyen de pignon d'engrenage (44).

3. Dispositif régulateur de couple (10, 100, 200) selon la revendication 2, caractérisé en ce qu'il est prévu une rondelle de blocage (63) pour empêcher la rotation de l'écrou de blocage (62) par rapport au manchon fileté (14).

4. Dispositif régulateur de couple (10, 100, 200) selon l'une des revendication 2 ou 3, caractérisé en ce qu'il est prévu un autre disque (34) claveté sur le manchon fileté (14), de manière que le premier disque mentionné (52) tourne à l'unisson avec l'autre disque (34) et en ce que le matériau à friction est placé entre l'autre disque (34) et le moyen de pignon d'engrenage (44).

5. Dispositif régulateur de couple (10, 100, 200) selon la revendication 4, caractérisé en ce qu'il est prévu une plaque de pression (12) laquelle est placée adjacente à l'autre disque (34), et en ce qu'un moyen à ressort (30) est disposé entre l'autre disque (34) et la plaque de pression (12), le moyen à ressort (30) appuyant sur l'autre disque (34), de manière que l'autre disque (34) sollicite le matériau à friction contre le moyen de pignon d'engrenage (44).

6. Dispositif régulateur de couple (10, 100, 200) selon la revendication 5, dans lequel le moyen à ressort (30) a la forme d'au moins une rondelle à ressort.

7. Dispositif régulateur de couple selon la revendication 6, caractérisé en ce que l'autre disque (34) a au moins un ergot (28) traversant la rondelle à ressort au moins.

8. Dispositif régulateur de couple selon la revendication 7, caractérisé en ce que la plaque de pression (12) a des ouvertures (26) correspondant à l'ergot ou à chaque ergot (28), chaque ergot (28) étant reçu en coulissement dans une correspondante des ouvertures (26).

9. Dispositif régulateur de couple (10) selon l'une quelconque des revendications précédentes, caractérisé en ce que le matériau à faible friction a la forme d'un disque annulaire (40, 50).

10. Dispositif régulateur de couple (10) selon la revendication 9, caractérisé en ce que le disque annulaire en matériau à faible friction a une ou plusieurs rainures radiales (51) pour permettre le passage d'un liquide de lubrification.

11. Dispositif régulateur de couple (100, 200) selon l'une des revendications 1 à 8, caractérisé en ce que le matériau à faible friction a la forme d'une pluralité de boutons (102, 104).

12. Dispositif régulateur de couple selon la revendication 11, caractérisé en ce que le dispositif comprend une cage à boutons (108) dans laquelle les boutons en matériau à faible friction sont reçus et maintenus les uns par rapport aux autres.

13. Dispositif régulateur de couple (100) selon la revendication 12, caractérisé en ce que la cage à boutons (108) comprend une pluralité d'ouvertures (114), en ce que chaque bouton (102, 104) porte une bride (106) sur sa circonférence et en ce qu'il est reçu dans l'une des ouvertures (114) de la cage à boutons (108).

14. Dispositif régulateur de couple (100) selon la revendication 13, caractérisé en ce que les brides (106) des boutons adjacents (102, 104) espacés radialement sont disposées sur des côtés opposés de la cage à boutons (108) pour empêcher la cage à boutons (108) de venir en contact avec le moyen de pignon d'engrenage (44) ou le disque (34, 52).

15. Dispositif régulateur de couple (100) selon la revendication 14, caractérisé en ce que le moyen de pignon d'engrenage (44) comprend une évidement annulaire et en ce que la cage à boutons (108) a une pluralité de découpes périphériques ouvertes (118) configurées de manière qu'un bouton (102, 104) reçu dans l'une des découpes ouvertes (118) s'étend au-delà d'un bord extérieur de la cage à boutons (108), afin de centrer la cage à boutons (108) dans l'évidement annulaire du moyen de pignon d'engrenage (44) et à empêcher la périphérie de la cage à boutons (108) de venir en contact avec le moyen de pignon d'engrenage (44).

16. Dispositif régulateur de couple (200) selon la revendication 11, caractérisé en ce que le disque (205, 220) comprend une pluralité d'évidements (206) et en ce qu'un bouton (212) est localisé dans un évidement respectif (206) du disque (205, 220).

17. Dispositif régulateur de couple (200) selon la revendication 16, caractérisé en ce que le dispositif (200) comprend un disque annulaire (204) en matériau à faible friction, et en ce que les boutons (212) ont des faces qui viennent en prise avec le disque annulaire (204 en matériau à faible friction, le disque annulaire (204) en matériau à faible friction étant placé entre les boutons (212) et le moyen de pignon d'engrenage (44), de façon que le disque annulaire (204) en matériau à faible friction soit immobilisé entre les boutons (212) et le moyen de pignon d'engrenage (44).

18. Dispositif régulateur de couple (200) selon la revendication 17, caractérisé en ce que les faces des boutons (212) sont formées avec une pluralité de protubérances (219).

19. Dispositif régulateur de couple (200) selon l'une des revendications 17 ou 18, caractérisé en ce que le disque annulaire en matériau à faible friction (204) est reçu et localisé dans un évidement annulaire correspondant (202) du moyen de pignon d'engrenage (44).

20. Dispositif régulateur de couple (200) selon la revendication 19, caractérisé en ce que le disque annulaire (204) en matériau à faible friction est positivement en prise avec le moyen de pignon d'engrenage (44) de façon à empêcher le disque annulaire (204) de tourner par rapport au moyen de pignon d'engrenage (44).

21. Dispositif régulateur de couple (200) selon l'une quelconque des revendications précédentes, caractérisé en ce que le moyen de pignon d'engrenage présente une ou plusieurs encoches (61) qui le traversent pour permettre au liquide de lubrification de le traverser et de refroidir le matériau à friction.

22. Dispositif régulateur de couple (10) selon l'une des revendications 9 ou 10, caractérisé en ce que le matériau à faible friction est un polyéthylène à poids moléculaire ultra-élevé.

23. Dispositif régulateur de couple (10) selon la revendication 22, caractérisé en ce que le polyéthylène à poids moléculaire ultra-élevé a un poids moléculaire compris entre 3 millions et 8 millions.

24. Dispositif régulateur de couple (100, 200) selon l'une quelconque des revendications 1 à 20, caractérisé en ce que le matériau à faible friction a des faces de dérapage et en ce qu'il est formé en céramique, les faces de dérapage étant rodées à une finition de structure extrêmement fine.

25. Dispositif régulateur de couple (100, 200) selon la revendication 24, caractérisé en ce que les faces de dérapage sont rodées à une rugosité moyenne de surface inférieure à environ 55 micromètres.
